(19) Europäisches Patentamt / European Patent Office / Office européen des brevets

(11) **EP 4 077 137 B1**

(12) **FASCICULE DE BREVET EUROPEEN**

(45) Date de publication et mention
de la délivrance du brevet:
**29.04.2026 Bulletin 2026/18**

(21) Numéro de dépôt: **20823881.6**

(22) Date de dépôt: **17.12.2020**

(51) Classification Internationale des Brevets (IPC):
**B64U 50/13** *(2023.01)* **F15B 11/042** *(2006.01)*
**F15B 11/16** *(2006.01)* **B64F 1/36** *(2024.01)*
**B64F 3/02** *(2006.01)*

(52) Classification Coopérative des Brevets (CPC):
**B64F 1/362; B64U 30/20; B64U 50/13;**
**F15B 11/042; F15B 11/16;** B64F 3/02;
B64U 2201/202; F15B 2211/20515;
F15B 2211/20538; F15B 2211/40507;
F15B 2211/40515; F15B 2211/40523;
F15B 2211/41527; F15B 2211/527; F15B 2211/62;
(Cont.)

(86) Numéro de dépôt international:
**PCT/EP2020/086765**

(87) Numéro de publication internationale:
**WO 2021/122990 (24.06.2021 Gazette 2021/25)**

(54) **DRONE HYDRAULIQUE MULTI-ROTOR**

HYDRAULISCHE MEHRROTORDROHNE

MULTI-ROTOR HYDRAULIC DRONE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2019 FR 1915355**

(43) Date de publication de la demande:
**26.10.2022 Bulletin 2022/43**

(73) Titulaires:
• **Université de technologie de Compiègne (UTC)**
**60203 Compiègne Cedex (FR)**
• **Centre National de la Recherche Scientifique
(CNRS)**
**75016 Paris (FR)**

(72) Inventeurs:
• **NOPPE, Eric**
**60200 Compiègne (FR)**
• **DEMIRAS, Jérôme**
**60203 Compiègne Cedex (FR)**

(74) Mandataire: **Ipsilon**
**12 Avenue d'Italie**
**75013 Paris (FR)**

(56) Documents cités:
EP-A1- 3 450 312 WO-A1-2016/068767
CN-A- 104 760 699 GB-A- 1 146 630
US-A- 1 939 156 US-A- 3 345 016

• PURDUE NEWS SERVICE: "Advancement in
driverless aircraft could direct the future of
drones, flight - Purdue University News", 9 May
2019 (2019-05-09), XP055724155, Retrieved from
the Internet <URL:https://www.purdue.edu/
newsroom/releases/2019/Q2/
using-the-power-of-fluid-for-the-future-of-dro
nes,-flight.html> [retrieved on 20200820]

**(Cont. page suivante)**

(52) Classification Coopérative des Brevets (CPC):
(Cont.)F15B 2211/625; F15B 2211/63;
F15B 2211/665; F15B 2211/6651; F15B 2211/7058;
F15B 2211/71; Y02T 50/40; Y02T 50/60

## Description

### Domaine technique

La présente invention concerne un drone hydraulique.

### Technique antérieure

Les drones à moteurs électriques ont connu un développement important ces dernières années, avec les progrès des batteries et de l'électronique embarquée.

Il a été proposé, pour des applications de surveillance notamment, de fournir l'énergie électrique au drone via un câble relié au sol. Les moteurs électriques de sustentation des drones connaissent de fortes variations de courant, en fonction des besoins de stabilisation. Ainsi, l'électronique de puissance associée à ce type de moteurs n'est pas prévue pour fonctionner en continu pendant très longtemps, ce qui implique des opérations de maintenance rapprochées, et finalement la durée de vol n'est pas aussi longue que souhaitée. EP 3450312 divulgue un drone hydraulique selon l'état de la technique.

Le brevet US 3 345 016 décrit un drone hydraulique comportant des moteurs hydrauliques, le contrôle de la vitesse de rotation de chaque moteur étant assuré par une variation du débit d'alimentation en fluide du moteur par l'intermédiaire d'un système de « court-circuit » entre les lignes d'alimentation et de retour en fluide du moteur. Un tel circuit entraîne une perte de puissance par dissipation d'énergie dans le court-circuit, et le régime moteur est impossible à contrôler précisément. En effet, la commande centralisée des taux d'ouverture des quatre « courts-circuits » n'assure aucune proportionnalité dans la mesure où le débit dans chaque « court-circuit » dépend du taux d'ouverture mais aussi de la pression. Or, la pression est l'image du couple résistant de l'hélice donc variable avec la vitesse de rotation et par suite le débit.

La demande WO 2019/074860 décrit un drone hydraulique comportant des moteurs hydrauliques à cylindrée variable, le contrôle de la vitesse de rotation de chaque moteur étant assuré par une variation de la cylindrée du moteur et non par une variation du débit d'alimentation en fluide du moteur, lequel demeure constant. La construction des moteurs est complexe, du fait du contrôle de cylindrée. Le contrôle de vitesse de l'hélice est également complexe dans la mesure où la vitesse résulte non pas directement du débit mais indirectement du couple résistant et de la cylindrée.

Il existe un besoin pour remédier à certains inconvénients des drones connus, rappelés plus haut, en particulier diminuer leur poids afin d'augmenter leur capacité d'emport, améliorer la précision de la régulation de la vitesse de rotation des moteurs hydrauliques, et répondre à la demande de fiabilité et de réactivité de ce type de drone.

### Exposé de l'invention

L'invention vise à répondre à ce besoin et a pour objet un drone hydraulique selon la revendication 1.

L'invention permet de bénéficier de la fiabilité des moteurs hydrauliques, ainsi que de leur bon rapport puissance/poids. Les voies de commande des moteurs, en assurant un réglage à partir d'un point de fonctionnement donné, correspondant à la première position de la vanne, offrent une bonne réactivité du contrôle et permettent d'utiliser des vannes de poids réduit, nécessitant une puissance réduite pour leur commande.

Le débit non nul peut alors être obtenu par une dérivation en parallèle de la vanne pilotable qui contribue au moins partiellement, notamment au moins pour moitié, au débit de fluide reçu par le moteur hydraulique lorsque la vanne pilotable est dans la première position. La vanne pilotable peut être fermée dans la première position d'ouverture et le débit non nul alors reçu par le moteur hydraulique peut provenir entièrement de la dérivation. De préférence, cette dérivation comporte un orifice calibré. En variante, le débit non nul est obtenu grâce à un débit de fuite de la vanne lorsqu'elle est dans la première position ; dans ce cas, la première position ne correspond pas à une fermeture complète de la vanne. Dans ce cas, le débit non nul que reçoit le moteur quand la vanne est dans la première position peut provenir pour partie de la dérivation et pour partie du débit de fuite de la vanne. Le système d'alimentation peut être agencé de telle sorte que le débit de fluide non nul reçu par au moins l'un des moteurs hydrauliques quand la vanne pilotable est dans la première position est un débit de ralenti prédéfini. La vitesse de rotation du ou des moteurs hydrauliques recevant le débit de ralenti prédéfini peut produire une poussée suffisante pour assurer la sustentation du drone.

Lorsque la vanne est dans la première position, le régime du moteur hydraulique peut être défini par un limiteur de pression, qui plafonne la pression du fluide à une valeur prédéfinie.

La pompe peut fonctionner à régime fixe, ou en variante à régime variable.

#### Drone multi-rotor

Un drone comportant 4 rotors ou plus est particulièrement approprié au vol stationnaire ou quasi-stationnaire du fait de la répartition de la portance dans le plan horizontal.

Chaque rotor du drone comporte une hélice entrainée par un moteur hydraulique. Ce dernier est de préférence à cylindrée fixe. L'entrainement est de préférence direct. En variante, une partie au moins des moteurs peut comporter un train d'engrenages pour démultiplier la vitesse de rotation. De préférence, les hélices sont à pas fixe. Elles peuvent être bipales ou tripales, voire plus.

La variation du débit dans chaque moteur du fait de l'ouverture plus ou moins grande de la vanne, placée en série avec le moteur, peut constituer le seul moyen de réglage de l'orientation du drone.

## Drone hydraulique

Par « drone hydraulique », il faut comprendre un drone comportant un ou plusieurs rotors dont la rotation est assurée par un ou plusieurs moteurs hydrauliques. Le contrôle de la vitesse de rotation de chaque rotor est alors de préférence assuré en jouant sur le débit d'alimentation du moteur.

Comparativement à un drone dont le contrôle de la vitesse de rotation des hélices est assuré par des moteurs électriques (encore appelé « drone électrique »), l'utilisation de moteurs hydrauliques permet d'améliorer considérablement la fiabilité car la modulation de puissance nécessaire au contrôle du drone peut être réalisée par l'hydraulique plutôt que par des composants électroniques. On remédie ainsi à la faiblesse des composants électroniques habituellement utilisés dans les drones électriques, qui présentent une durée de vie limitée en raison des variations d'intensité générées par les variations instantanées de puissance nécessaires au contrôle du drone.

Le drone peut être configuré pour voler à une altitude maximale de 200 mètres, préférentiellement de 150 mètres, encore plus préférentiellement, à une altitude comprise entre 80 et 100 mètres.

Le drone dépourvu de ses hélices peut s'inscrire dans un carré de côté compris entre 0,75 et 1,25 m, l'invention n'étant toutefois pas limitée à des dimensions particulières.

Lorsque le drone est filaire, son poids est de préférence inférieur ou égal à 25 kg.

Lorsque le drone est non filaire, son poids est de préférence inférieur ou égal à 8 kg.

## Drone filaire

Le drone peut être filaire ou non, étant de préférence filaire.

Par « drone filaire », il faut comprendre un drone relié au sol par un câble (encore appelé ombilic) permettant notamment l'acheminement d'énergie telle que de l'électricité depuis le sol vers le drone et/ou la transmission de données depuis le sol vers le drone et inversement.

Un drone filaire présente l'avantage de disposer d'une autonomie énergétique prolongée, ce qui peut lui permettre d'effectuer des vols longue durée, de plusieurs jours en continu. Cela est particulièrement souhaitable pour des missions d'observation et de surveillance en vol stationnaire ou quasi-stationnaire. De même, l'autonomie totale du drone pourra être encore plus grande en choisissant des composants peu gourmands en énergie.

Le câble peut présenter une longueur comprise entre 2 et 250 m, et être enroulé sur un dévidoir placé au sol ou embarqué sur le drone. Le dévidoir peut permettre de garder le câble tendu.

De préférence, la tension du câble est réglée par un mécanisme d'entraînement du dévidoir de telle sorte que l'effort de traction qui est exercé par le drone sur le câble est constant, notamment durant la montée du drone ou sa descente.

Le câble peut comporter une fibre optique, une ou plusieurs paires torsadées et/ou un câble coaxial, pour transmettre des données depuis le sol vers le drone et inversement. Le câble peut permettre une transmission avec un débit élevé des données en temps réel, de manière permanente ou périodique.

Le drone peut comporter une électronique embarquée configurée pour générer un courant adapté à alimenter les composants électriques du drone, et en particulier le moteur d'entrainement de la pompe hydraulique. Ce moteur est de préférence un moteur sans balais, alimenté en courant polyphasé, notamment triphasé, à partir d'un variateur de puissance piloté par le contrôleur de vol.

## Capteurs embarqués

Le drone peut comporter tout type de capteur embarqué, utile à son pilotage ou à sa mission.

Le drone, notamment son contrôleur de vol, peut comporter et/ou être relié à un accéléromètre 3 axes, un gyromètre 3 axes, un magnétomètre 3 axes, un capteur de pression atmosphérique, une caméra, notamment infrarouge, un altimètre et/ou un récepteur de données de localisation, de type récepteur GPS par exemple. Cela peut permettre au contrôleur de vol et/ou à un opérateur au sol de connaître la position, l'altitude, les angles de roulis, tangage et lacet, et/ou la vitesse du drone.

Le drone peut comporter un capteur embarqué de mesure de la composition de l'environnement gazeux autour du drone, une caméra, notamment infrarouge, un capteur télémétrique, notamment de type acoustique, radar et/ou laser tel qu'un lidar. Cela peut permettre d'effectuer des missions de surveillance et de détecter un potentiel risque chimique, toxique, d'incendie ou d'explosion, au-dessus d'un site industriel par exemple.

Le drone peut comporter au moins un capteur de température et de pression du fluide alimentant les moteurs hydrauliques.

Les données générées par certains capteurs embarqués peuvent servir à différentes fonctions. Par exemple, une caméra peut servir à piloter le drone mais peut également servir à l'acquisition d'images pour des missions de surveillance et de gardiennage.

Les données générées par les capteurs embarqués peuvent être transmis au sol par un moyen de communication sans fil et/ou par un câble lorsque le drone est filaire.

### Drone autonome

Le drone peut être autonome.

Par « drone autonome », il faut comprendre que le drone, notamment son contrôleur de vol, comporte des moyens informatiques, tels qu'un microcalculateur, qui lui permettent d'assurer un certain nombre de fonctions de manière autonome. Le drone est par exemple configuré pour effectuer de manière autonome les phases de décollage, d'atterrissage et/ou de vol en stationnaire ou quasi-stationnaire à une altitude préétablie.

### Pompe hydraulique

De préférence, la pompe hydraulique alimente en fluide sous pression la pluralité des moteurs hydrauliques.

La pompe hydraulique est de préférence à cylindrée fixe.

Le moteur d'entrainement de la pompe hydraulique peut être à vitesse variable.

Le moteur peut être de tout type, notamment électrique ou thermique, étant de préférence électrique, notamment sans balais, comme mentionné plus haut.

Le drone peut comporter un câble configuré pour alimenter en électricité le moteur d'entrainement de la pompe depuis le sol lorsque ce dernier est électrique, comme indiqué plus haut. Dans une variante, ou additionnellement, le drone comporte une batterie embarquée, notamment rechargeable, configurée pour alimenter en électricité le moteur électrique d'entraînement de la pompe.

Il peut être avantageux que le drone dispose de plusieurs sources d'électricité pour alimenter le moteur électrique d'entraînement de la pompe, telles qu'un câble reliant le drone au sol et une batterie embarquée, l'une des sources pouvant prendre le relais en cas de défaillance de l'autre.

Le drone peut comporter un réservoir contenant un carburant pour alimenter le moteur lorsque ce dernier est thermique, ou un réservoir alimentant une pile à combustible fournissant l'énergie électrique nécessaire au moteur d'entraînement de la pompe.

Le drone peut comporter un système de production d'un flux d'air pour refroidir le moteur d'entrainement de la pompe, notamment un ou plusieurs ventilateurs.

La pompe peut être couplée à plusieurs moteurs lui permettant d'assurer son fonctionnement. Cela peut permettre à l'un des moteurs de prendre le relais en cas de défaillance de l'autre. Les moteurs peuvent être du même type ou différent. En variante, la pompe hydraulique est couplée à un unique moteur d'entrainement.

La pompe peut être entraînée à une vitesse fixe pendant le vol. Le régime de la pompe est choisi de manière à obtenir la pression nécessaire au bon fonctionnement des moteurs hydrauliques.

Un ou plusieurs limiteurs de pression peuvent être placés en sortie de la pompe et en amont des vannes, comme mentionné ci-après.

Le drone peut comporter une unique pompe hydraulique.

### Fluide hydraulique

Le fluide hydraulique alimentant les moteurs hydrauliques est de préférence une huile.

Ce fluide peut répondre aux normes ISO 11158:2009, DIN 51524 et/ou ASTM D6158. Le fluide hydraulique peut être de grade ISO 32, ISO 46 ou ISO 68.

### Réservoir de fluide hydraulique

Le drone comporte de préférence un réservoir accumulateur contenant et/ou destiné à recevoir le fluide hydraulique et permettant d'alimenter la pompe hydraulique en fluide hydraulique. Ce réservoir peut permettre de compenser les variations de volume du fluide, notamment sa dilatation thermique, liées au fonctionnement des moteurs.

La pression du fluide au sein du réservoir peut être la pression atmosphérique.

Le réservoir peut présenter un volume compris entre 0,75 et 1,25 L, l'invention n'étant toutefois pas limitée à une capacité particulière.

De préférence, le réservoir est disposé de façon à ce que la pompe hydraulique fonctionne en charge. Par exemple, le réservoir est disposé au-dessus de la pompe hydraulique de manière à ce que le transfert de fluide depuis le réservoir vers la pompe se fasse par gravité. Cela peut permettre de s'affranchir d'un système d'aspiration pour acheminer le fluide depuis le réservoir vers la pompe.

### Vannes pilotables

De préférence, les vannes pilotables sont commandées électriquement.

Les vannes peuvent être unidirectionnelles. Elles sont de préférence proportionnelles mais en variante fonctionnent en tout ou rien. L'ouverture et la fermeture des vannes peut alors se faire à haute fréquence.

Les vannes peuvent être à commande directe (DDV pour « Direct Drive Valve »).

De préférence, les vannes pilotables sont des servovalves. Ces vannes permettent le réglage de débit avec une précision élevée et un faible temps de réponse.

Les vannes peuvent être parcourues chacune par un débit de fluide inférieur ou égal à 7 L/min et soumises en fonctionnement à une pression de fluide inférieure ou égale à 400 bars.

Chaque moteur peut comporter une seule vanne pilotable en série avec lui.

## Moteurs hydrauliques

Chaque moteur hydraulique est configuré pour entrainer en rotation une hélice, la vitesse de rotation de l'hélice étant fonction du débit d'alimentation en fluide du moteur hydraulique et le couple délivré par le moteur hydraulique étant fonction de la pression du fluide en entrée du moteur hydraulique.

Les moteurs hydrauliques sont de préférence des moteurs rapides.

Les moteurs hydrauliques sont de préférence configurés pour entrainer en rotation les hélices à une vitesse de rotation comprise entre 300 et 7000 tr/min, de préférence entre 2100 et 4000 tr/min.

Les moteurs hydrauliques peuvent être choisis pour délivrer chacun un couple compris entre 0,1 et 3,0 N.m.

La pression du fluide en entrée du moteur hydraulique peut être comprise entre 50 et 400 bars, de préférence entre 250 et 300 bars. La pression du fluide en sortie du moteur hydraulique peut être la pression atmosphérique.

Les moteurs hydrauliques peuvent être de tout type, notamment à pistons, à palettes ou à engrenages, étant de préférence à pistons, en particulier à pistons axiaux. De tels moteurs à pistons axiaux offrent une grande puissance mécanique par rapport à leur faible poids.

Les moteurs hydrauliques peuvent être à cylindrée fixe. Par rapport à des moteurs hydrauliques à cylindrée variable, de tels moteurs hydrauliques à cylindrée fixe présentent un fonctionnement simplifié et une consommation de puissance réduite.

Les moteurs hydrauliques peuvent être de forme générale extérieure cylindrique, avec par exemple une longueur comprise entre 10 et 15 cm et un diamètre compris entre 2 et 4 cm.

Les moteurs hydrauliques peuvent être à double sens de rotation.

## Refroidissement du fluide

Le drone peut comporter au moins un échangeur thermique pour refroidir le fluide hydraulique, en particulier en sortie des moteurs hydrauliques et/ou des limiteurs de pression. Cela permet de maîtriser la température du fluide, ce dernier ayant tendance à s'échauffer lors du fonctionnement du drone.

De préférence, le drone comporte plusieurs échangeurs, notamment un par voie. Les échangeurs peuvent être positionnés sur des bras du drone, à proximité des hélices, de telle manière à se situer dans le flux d'air généré par la rotation des hélices. De préférence, dans ce cas, les échangeurs sont positionnés de manière à se situer dans la zone où le flux d'air généré par la rotation des hélices est maximal.

Lorsque les échangeurs sont intégrés aux bras du drone, ils sont avantageusement utilisés pour contribuer à renforcer la rigidité des bras et donc de la structure globale du drone.

Le fluide hydraulique refroidi en sortie des échangeurs peut être dirigé vers l'entrée du réservoir de fluide.

La pression du fluide au sein des échangeurs thermiques peut être la pression atmosphérique. Cela facilite la fabrication des échangeurs, qui n'ont alors pas à résister à une pression importante.

## Limiteur(s) de pression

Le drone peut comporter au moins un limiteur de pression pour limiter la pression du fluide en entrée de la vanne pilotable à une valeur limite prédéfinie dite pression limitée, notamment comprise entre 250 et 300 bars.

De préférence, le drone comporte plusieurs limiteurs de pression, notamment un par voie, chaque limiteur étant notamment positionné en amont de la vanne pilotable.

Lorsque la pression du fluide hydraulique en sortie de la pompe hydraulique dépasse la valeur limite prédéfinie, l'excès de pression peut être dérivé vers le circuit basse pression, notamment vers l'entrée du ou des échangeurs thermiques.

## Circuit hydraulique haute pression

Le drone peut comporter un circuit hydraulique haute pression entre la sortie de la pompe hydraulique et l'entrée des moteurs hydrauliques. Par exemple, la pression du fluide hydraulique dans le circuit hydraulique haute pression est comprise entre 250 et 300 bars.

## Circuit hydraulique basse pression

Le drone peut comporter un circuit hydraulique basse pression entre les sorties des moteurs hydrauliques et des limiteurs de pression et l'entrée du réservoir.

Par exemple, la pression du fluide hydraulique dans le circuit hydraulique basse pression est la pression atmosphérique.

## Procédé de fonctionnement

L'invention divulgue un procédé de fonctionnement d'un drone hydraulique multi-rotor, dans lequel :

- pour décoller, on augmente la vitesse du moteur d'entrainement de la pompe au-delà d'un seuil rendant actif le limiteur de pression et on maintient ensuite la vitesse d'entraînement de la pompe à une valeur constante au-dessus de ce seuil, la pression en entrée de la vanne pilotable étant alors égale à une valeur prédéfinie imposée par le limiteur de pression,

- durant le vol, on agit sur chaque vanne pilotable pour modifier l'orientation du drone en tant que besoin, alors que le limiteur de pression est actif et maintient la pression en entrée de la vanne à ladite valeur prédéfinie.

## Brève description des dessins

L'invention pourra être mieux comprise à la lecture de la description détaillée qui va suivre, d'exemples de mise en œuvre non limitatifs de celle-ci, et à l'examen du dessin annexé, sur lequel :

[Fig 1] la figure 1 représente de façon schématique un exemple de drone selon l'invention,

[Fig 2] la figure 2 est une vue analogue à la figure 1 d'une variante de drone,

[Fig 3] la figure 3 représente de manière schématique et partielle, en perspective, un drone hydraulique multi-rotor selon un exemple de mise en œuvre de l'invention,

[Fig 4] la figure 4 représente le drone de la figure 3 sous un angle de vue différent,

[Fig 5] la figure 5 représente le drone de la figure 3 en vue de dessous,

[Fig 6] la figure 6 représente le drone de la figure 3 en vue de dessus,

[Fig 7] la figure 7 représente un exemple de support de moteur hydraulique,

[Fig 8] la figure 8 représente en vue de dessous le support de la figure 7,

[Fig 9] la figure 9 représente un détail de réalisation du support,

[Fig 10] la figure 10 représente un autre détail de réalisation du support,

[Fig 11] la figure 11 représente un détail de réalisation du drone,

[Fig 12] la figure 12 représente de façon schématique un autre exemple de drone,

[Fig 13] la figure 13 est un schéma montrant un exemple d'évolution de la pression hydraulique en entrée de la vanne pilotable et de la pression en sortie de la pompe hydraulique en fonction du temps au cours du fonctionnement du drone selon l'invention, et

[Fig 14] la figure 14 est un schéma montrant l'évolution de la vitesse du moteur d'entrainement de la pompe en fonction du temps au cours du fonctionnement illustré sur la figure 13.

## Description détaillée

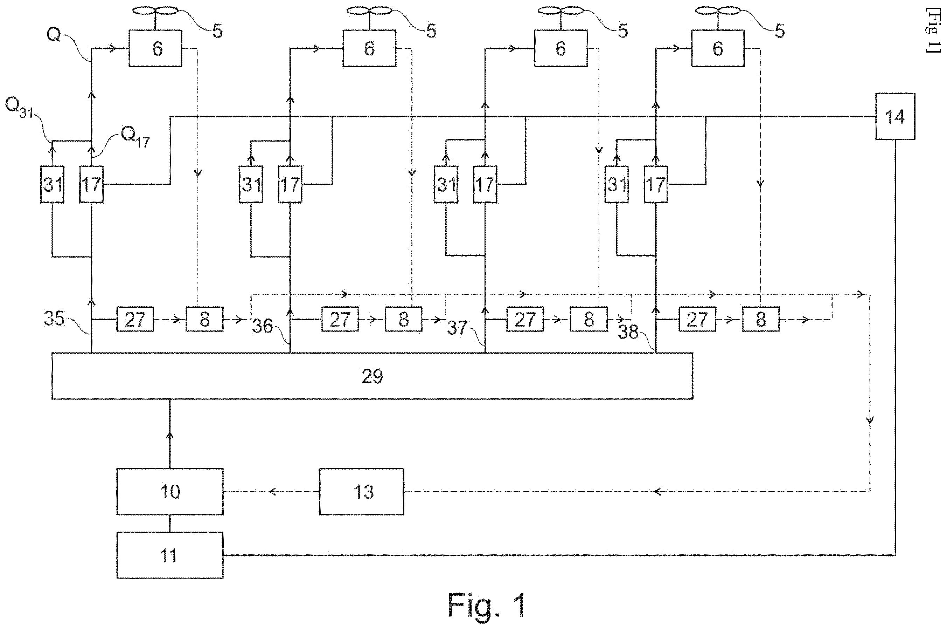

On a représenté à la figure 1 de façon schématique différents éléments constitutifs d'un drone hydraulique multi-rotor 1 selon l'invention. Sur cette figure, les lignes en traits pleins correspondent à la partie haute pression du circuit hydraulique alors que les lignes en traits discontinus correspondent à la partie basse pression du circuit hydraulique.

Dans cet exemple, le drone 1 est quadrirotor et comporte quatre moteurs hydrauliques 6 entrainant chacun une hélice 5 de manière directe. En variante, le drone peut être hexarotor ou octorotor, entre autres possibilités.

Le drone 1 comporte une pompe hydraulique 10 entrainée par un moteur électrique 11, qui dans cet exemple est alimenté en énergie électrique depuis le sol par un câble (non représenté).

La pompe 10 est alimentée en entrée par un fluide hydraulique contenu dans un réservoir accumulateur 13 et met sous pression ce fluide de manière à alimenter les moteurs 6.

Le fluide sous pression en sortie de la pompe 10 est réparti par l'intermédiaire d'un diviseur de débit 29 entre plusieurs voies 35, 36, 37, 38 de réglage de la puissance des moteurs hydrauliques 6, chaque voie alimentant en fluide sous pression un moteur correspondant 6. Dans l'exemple illustré à la figure 1, le fluide sous pression en sortie de la pompe 10 est ainsi réparti entre quatre voies de manière à alimenter autant de moteurs hydrauliques 6.

Chaque voie comporte une vanne 17 pilotable de manière proportionnelle, permettant de faire varier en entrée du moteur 6 correspondant le débit d'alimentation en fluide sous pression et ainsi la vitesse de rotation de l'hélice 5 associée. De préférence, la vanne pilotable 17 est une servovalve à commande électrique directe.

Le drone 1 comporte un contrôleur de vol 14 configuré pour piloter la vitesse du moteur d'entrainement 11 de la pompe 10 et l'ouverture de chaque vanne 17 en fonction du régime de vol et de l'orientation à donner au drone notamment.

La vanne 17 peut passer, en réponse à un signal de commande électrique provenant du contrôleur de vol 14, d'une première position à une deuxième position, de manière à augmenter le débit de fluide sous pression passant à travers la vanne 17.

Chaque voie comporte une dérivation en parallèle de la vanne 17, cette dérivation comportant un orifice calibré 31 choisi pour délivrer en entrée du moteur 6 correspondant, un débit sensiblement constant en fluide sous pression.

Chaque voie comporte un limiteur de pression 27 en amont de la vanne 17 et de l'orifice calibré 31. Le limiteur de pression 27 permet de limiter la pression du fluide à l'entrée de la vanne 17 à une valeur prédéfinie et sensiblement constante, indépendamment de la pression en amont du limiteur, pourvue qu'elle soit suffisamment grande pour rendre le limiteur actif. Le régime de fonctionnement de la pompe 10 est suffisant pour permettre au limiteur de pression d'être actif quelle que soit la position de la vanne 17.

Chaque moteur 6 est associé à un échangeur thermique 8 recevant en entrée le fluide sortant du moteur 6 et du limiteur de pression 27 et délivrant le fluide refroidi au réservoir accumulateur.

Lorsque le moteur d'entrainement 11 est électrique, comme dans l'exemple illustré, le contrôleur de vol 14 commande un variateur de vitesse qui est de préférence à découpage (non représenté) et permet de limiter le courant utilisé et donc le couple imposé par la pompe 10.

Le contrôleur de vol 14 comporte avantageusement un microcontrôleur ou autre calculateur (non représenté) permettant d'assurer un certain nombre de fonctions de manière autonome, comme par exemple le maintien du drone 1 en position stationnaire ou quasi-stationnaire en fonction de données de mesures provenant de capteurs embarqués sur le drone 1, tels que des capteurs de vitesse du vent et des angles de roulis, tangage et lacet.

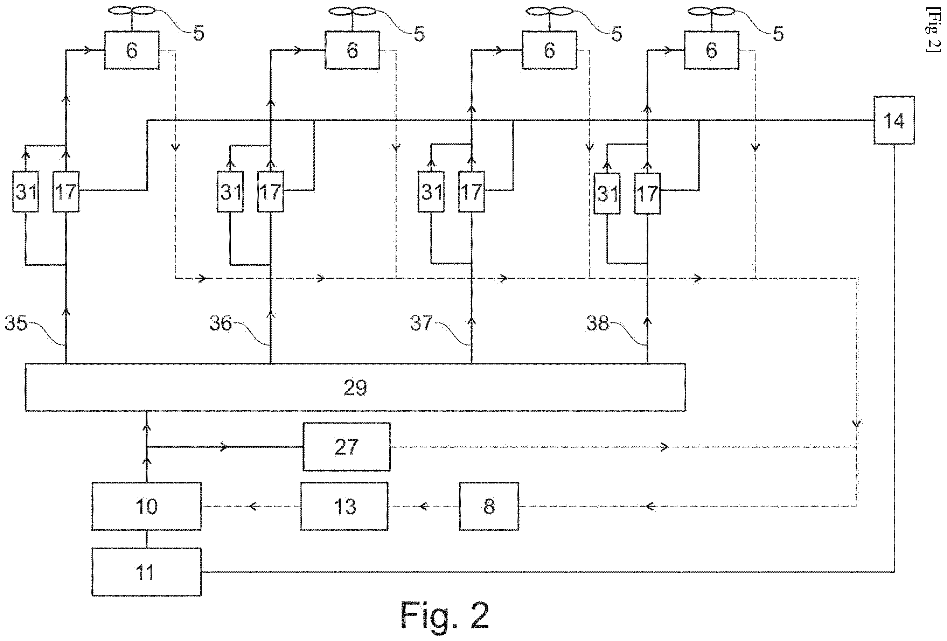

Dans la variante illustrée à la figure 2, le drone 1 comporte un seul limiteur de pression 27 positionné entre la sortie de la pompe 10 et l'entrée du diviseur de débit 29. De même, le drone 1 peut comporter un seul échangeur thermique 8, positionné entre la sortie des moteurs hydrauliques 6 et l'entrée du réservoir 13.

Dans un exemple de fonctionnement du drone 1, le débit d'alimentation en fluide sous pression en entrée de chaque moteur 6 est tel que :

$$Q = Q_{31} + Q_{17}$$

et $Q_{31} = r{*}Q$ avec $0{,}5 \le r \le 1$ par exemple, où

$Q$ : débit d'alimentation en fluide sous pression en entrée de chaque moteur 6,

$Q_{31}$ : débit en fluide sous pression en sortie de l'élément 31, et

$Q_{17}$ : débit en fluide sous pression en sortie de la vanne pilotable 17.

La vanne pilotable 17 peut être choisie de manière à être complètement fermée lorsqu'elle est dans la première position, de sorte que la totalité du débit d'alimentation en fluide sous pression en entrée de chaque moteur 6 provient alors de la dérivation comportant l'orifice calibré 31. Lorsque la vanne pilotable 17 est ouverte dans la deuxième position, le débit d'alimentation en fluide sous pression en entrée de chaque moteur 6 provient pour partie de la vanne et pour le restant de la dérivation. Par exemple, la moitié du débit est assurée par la vanne 17 et l'autre moitié par la dérivation.

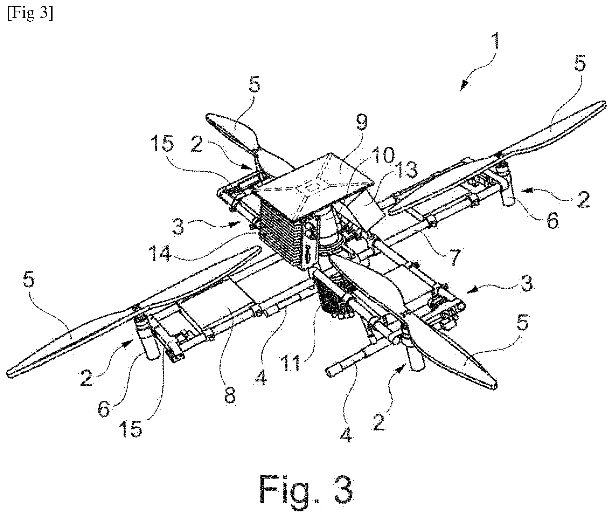

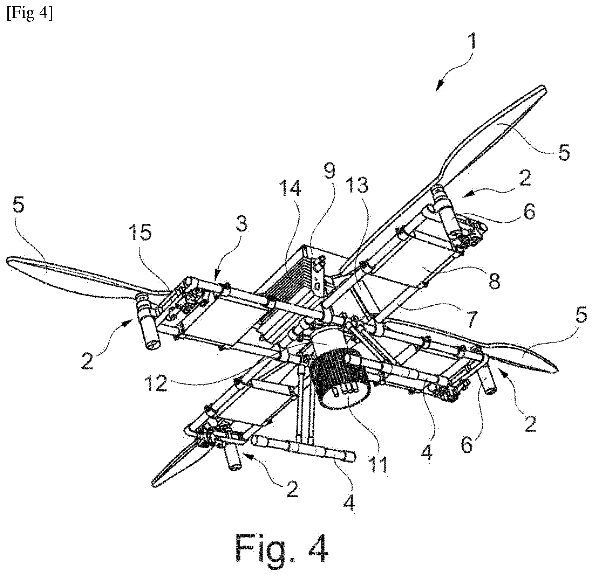

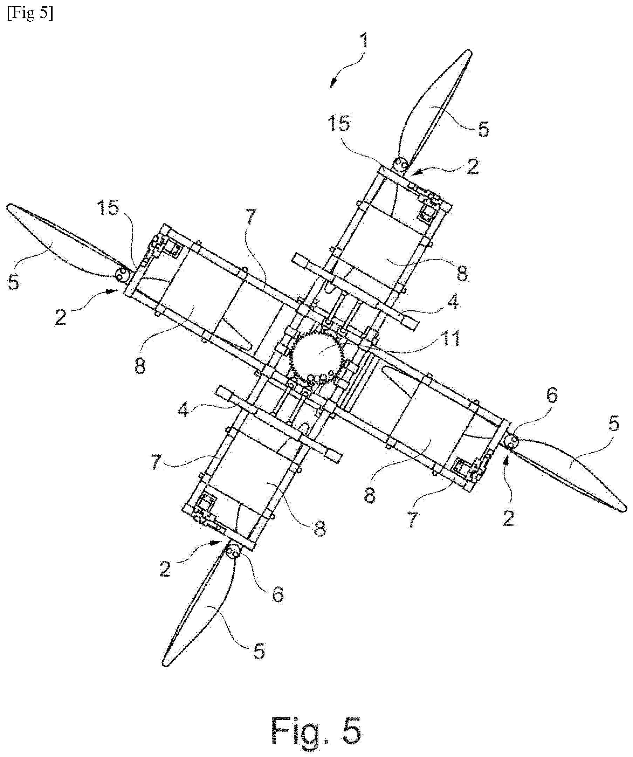

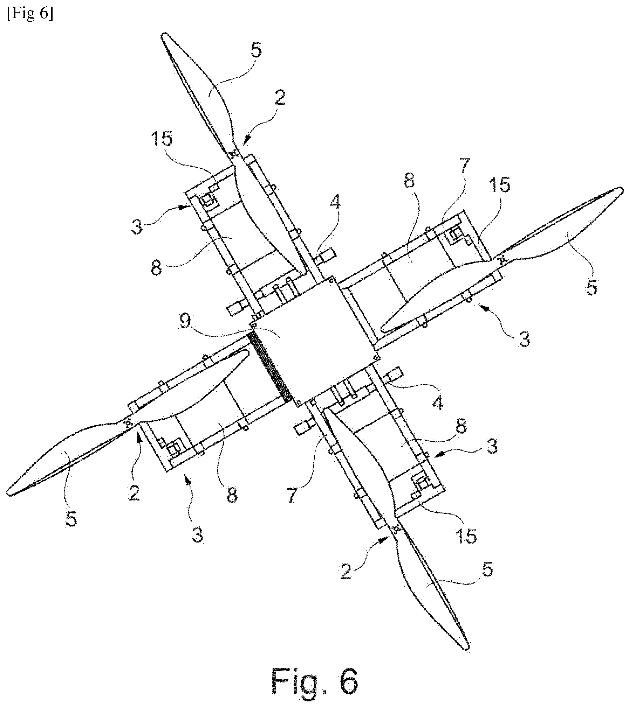

On a illustré aux figures 3 à 6 un exemple d'agencement des composants constitutifs d'un drone hydraulique multi-rotor 1 selon l'invention.

Dans cet exemple, le drone 1 est quadrirotor et comporte quatre bras 3 portant chacun un rotor. Le drone 1 peut reposer sur le sol par deux pieds 4 reliés aux bras 3.

Les moteurs hydrauliques 6 comportent chacun un rotor 2 entraînant une hélice 5, et sont chacun supportés par un bras 3 correspondant.

Un capotage 9 abrite la pompe 10 et le moteur électrique d'entrainement 11 de la pompe 10, l'accouplement entre la pompe 10 et son moteur électrique 11 étant protégé par un carter 12. La pompe 10 et son moteur électrique 11 sont de préférence, comme illustré, positionnés verticalement au centre du drone 1.

Les bras 3 et les pieds 4 du drone 1 sont formés par un assemblage de tubes 7, par exemple en carbone. Ces tubes peuvent être utilisés pour conduire le fluide hydraulique, lorsque cela est possible.

Chaque bras peut comporter des tubes parallèles.

Les échangeurs thermiques 8 sont chacun intégrés au sein d'un bras 3 correspondant, et rigidifie ce dernier en reliant les tubes 8.

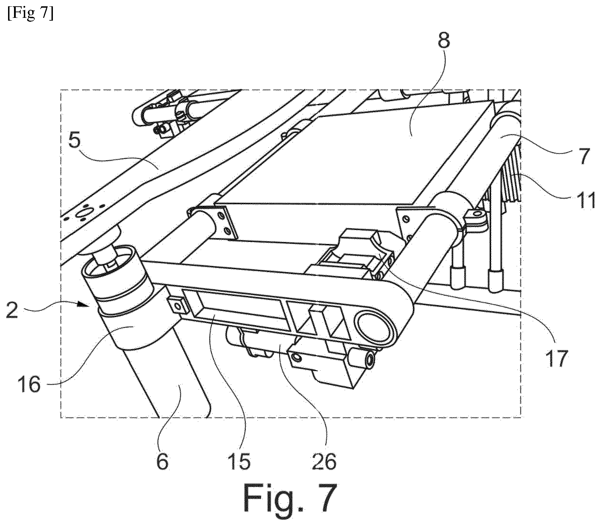

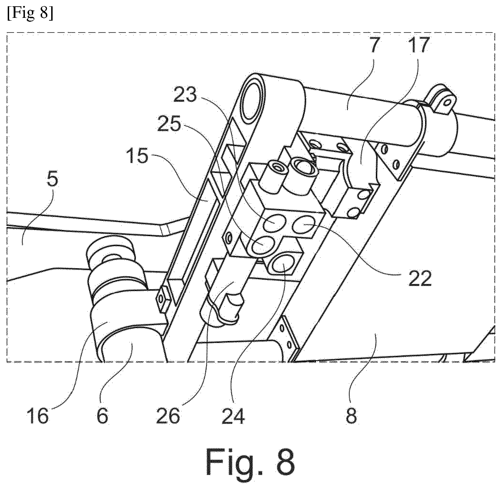

Comme illustré aux figures 7 à 10, chaque bras 3 porte à son extrémité un support 15 dans lequel le moteur hydraulique 6 correspondant est fixé. Le support 15 peut être monté, comme illustré, à l'extrémité des tubes et les relier.

Chaque support 15 comporte sur son côté extérieur un collier 16 dans lequel est engagé le moteur hydraulique 6 et peut supporter sur son côté intérieur la vanne pilotable 17 correspondante.

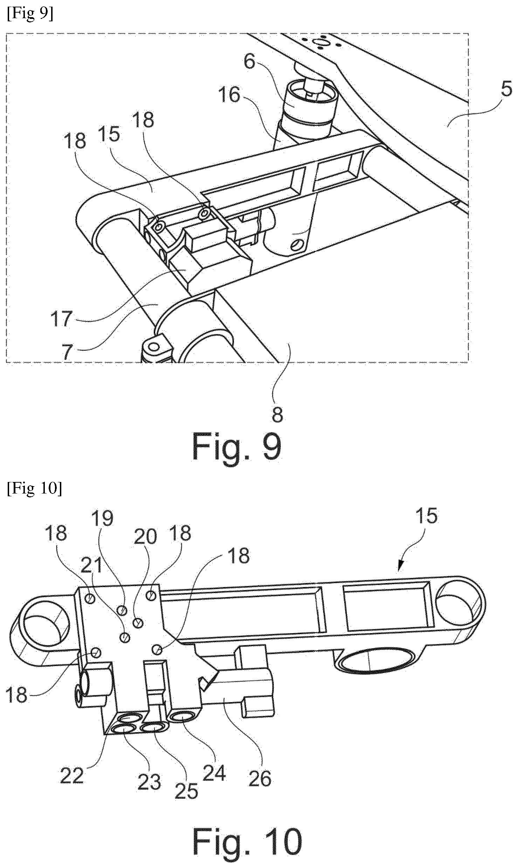

Comme illustré sur la figure 10, chaque support 15 peut comporter sur son côté intérieur, d'une part des trous 18 de fixation de la vanne 17 correspondante, et d'autre part des orifices 19, 20 et 21 respectivement pour la fuite, la sortie et l'entrée de fluide au niveau de celle-ci.

Sur son côté inférieur, chaque support 15 comporte des orifices 22, 23, 24 et 25 respectivement pour l'admission de fluide depuis la pompe 10, l'envoi de fluide vers l'échangeur thermique 8 correspondant, la sortie de fluide vers le moteur hydraulique 6 correspondant et le retour de fluide depuis le moteur hydraulique 6 correspondant.

Les orifices 22 et 24 sont reliés à des tuyaux hydrauliques non représentés, de haute résistance à la pression. Les orifices 23 et 25 sont reliés à des tuyaux hydrauliques non représentés, qui ne sont pas soumis à une pression élevée et peuvent être moins résistants.

Chaque support 15 comporte un tube 26 recevant le limiteur de pression 27 correspondant.

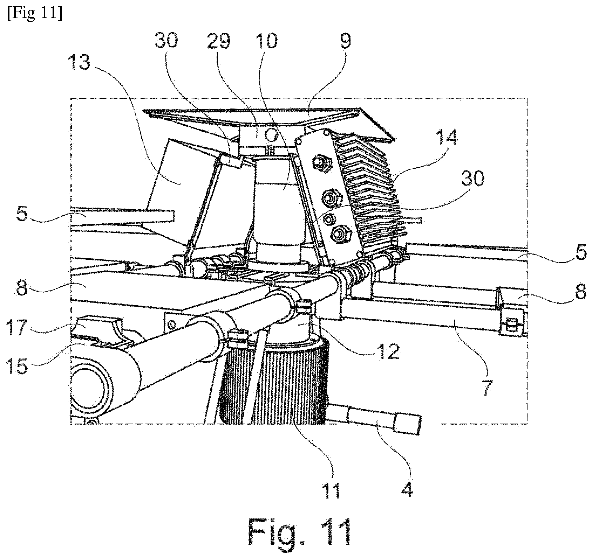

Comme illustré sur la figure 11, le capotage 9 est fixé via un élément de liaison 28 au diviseur de débit 29, lequel peut être constitué comme illustré d'un bloc perforé qui vient accueillir la sortie de la pompe 10. L'élément de liaison 28 est par exemple en forme de croix.

Des platines de support 30 sont fixées d'une part sur le bloc perforé 29 et d'autre part sur les bras 3 et permettent de maintenir le réservoir 13 de fluide et le contrôleur de vol 14.

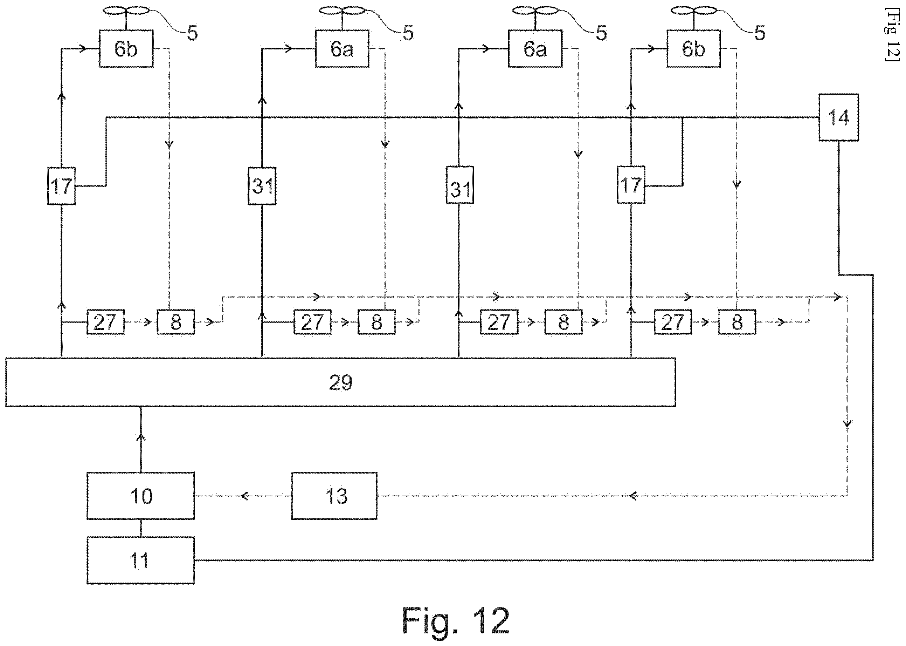

Le drone 1 illustré à la figure 12 comporte plusieurs moteurs hydrauliques de sustentation 6a et plusieurs moteurs hydrauliques d'orientation 6b. Sur la figure 12, uniquement deux moteurs de sustentation 6a et deux moteurs d'orientation 6b ont été représentés pour simplifier la compréhension de la figure.

Chacun des moteurs hydrauliques de sustentation 6a comporte une voie d'alimentation comportant un orifice calibré 31 connecté en série avec le moteur 6a correspondant de manière à ce que de chacun des moteurs 6a reçoive un débit d'alimentation constant prédéfini, ce débit d'alimentation pouvant correspondre à un débit permettant d'entrainer en rotation chacun des moteurs de sustentation 6a à une vitesse suffisante pour produire une poussée assurant juste la sustentation du drone 1.

Chacun des moteurs hydrauliques d'orientation 6b comporte une voie d'alimentation comportant une vanne pilotable 17 connectée en série avec le moteur 6b correspondant, la vanne 17 étant pilotable entre une position fermée et une position d'ouverture maximale pour régler le débit d'alimentation de chacun des moteurs d'orientation 6b.

Chacun des moteurs de sustentation 6a peut recevoir un débit d'alimentation constant prédéfini permettant d'assurer la sustentation du drone 1 alors que les moteurs d'orientation 6b sont à l'arrêt, les vannes 17 étant en position fermée. En jouant sur le degré d'ouverture des vannes 17, il est possible de faire varier la vitesse de rotation des moteurs d'orientation 6b et ainsi de contrôler l'orientation du drone et/ou de le stabiliser, i.e. le maintenir en position stationnaire ou quasi-stationnaire.

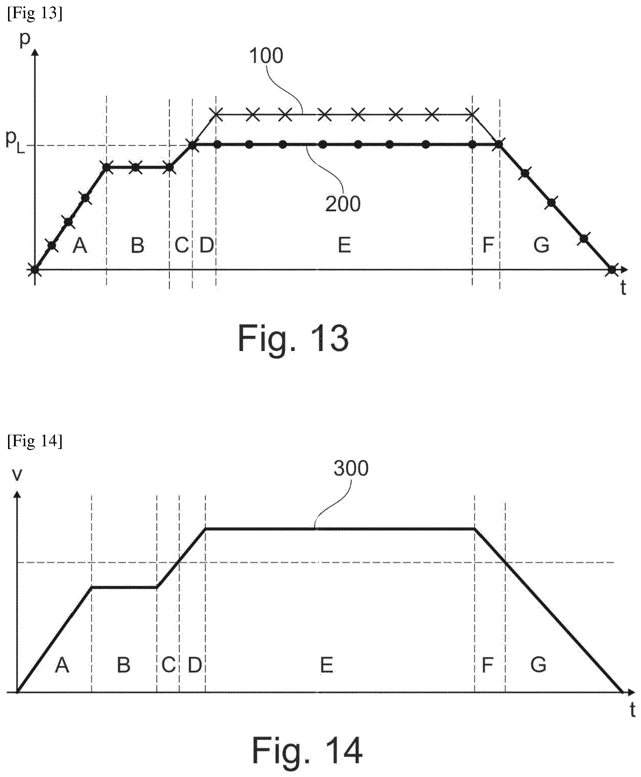

On va maintenant décrire en référence aux figures 13 et 14 le fonctionnement d'un drone selon le premier aspect de l'invention, dont tous les moteurs sont reliés en série avec une vanne pilotable et reçoivent un débit non nul de fluide lorsque la vanne est dans la première position, comme c'est le cas des drones dont les circuits hydrauliques sont illustrés sur les figures 1 et 2.

La figure 13 représente l'évolution 100 de la pression p en sortie de la pompe hydraulique 10 en fonction du temps t et l'évolution 200 de la pression p en entrée de la vanne pilotable 17 et de l'orifice calibré 31 en fonction du temps t.

La figure 14 représente l'évolution 300 de la vitesse v du moteur d'entrainement 11 de la pompe hydraulique 10 en fonction du temps t.

Dans une première étape A, les moteurs hydrauliques 6 sont démarrés. Pour ce faire, on augmente la vitesse du moteur d'entrainement 11 de la pompe hydraulique 10 en fonction de ses capacités de couple de manière à augmenter la pression du fluide en sortie de la pompe hydraulique 10 et en entrée de la vanne pilotable 17 et de l'orifice calibré 31.

Ensuite, à l'étape B, le drone 1 est en attente de décollage. Dans cette étape B, la vitesse du moteur d'entrainement 11 de la pompe hydraulique 10 reste constante. La vitesse de rotation des moteurs hydrauliques 6 est alors proche de celle nécessaire pour assurer le décollage du drone 1.

Pour faire décoller le drone, ce qui correspond à l'étape C, on augmente encore la vitesse du moteur d'entrainement 11 de la pompe hydraulique 10 en fonction de ses capacités de couple de manière à accroître la pression du fluide en sortie de la pompe hydraulique 10 jusqu'à ce que cette dernière atteigne une valeur limite prédéfinie autorisée par les limiteurs de pression 27, dite pression limitée $p_L$.

Ensuite, à l'étape D, on augmente encore la vitesse du moteur d'entrainement 11 de la pompe hydraulique 10 en fonction de ses capacités de couple de manière à augmenter la pression du fluide en sortie de la pompe hydraulique 10 jusqu'à une valeur supérieure à la pression limitée $p_L$ autorisée par les limiteurs de pression 27. Le limiteur de pression 27 permet d'avoir la pression limitée $p_L$ en entrée de la vanne pilotable 17 et de la dérivation comportant l'orifice calibré 31. Cette pression limitée $p_L$ est transformée, à travers l'orifice calibré 31, en un débit de ralenti constant qui assure une vitesse de rotation des moteurs hydrauliques 6 suffisante pour produire une poussée nécessaire à la sustentation du drone 1.

Durant l'étape suivante E, la vitesse du moteur d'entrainement 11 de la pompe hydraulique 10 est constante de manière à ce que la pression du fluide en sortie de la pompe hydraulique 10 et en entrée de la vanne pilotable 17 et de l'orifice calibré 31 soient constants. Dans cette étape E, la pompe hydraulique 10 génère une pression supérieure à la pression limitée $p_L$ autorisée par le limiteur de pression 27. Ainsi, la pression du fluide en sortie de la pompe hydraulique 10 est supérieure à celle en entrée de la vanne pilotable 17 et de l'orifice calibré 31.

Dans cette étape E, la vitesse du moteur d'entrainement 11 de la pompe hydraulique 10 associée au couple nécessaire définit la puissance nominale dont on a besoin pour le moteur d'entrainement 11. Cette puissance nominale est dans une plage typiquement définie autour de 1,6 fois la puissance nécessaire à la sustentation du drone 1. Le fait de définir la puissance nominale du moteur d'entrainement 11 de la pompe hydraulique 10 à cette valeur permet d'assurer que le moteur d'entrainement 11 tient les exigences de durabilité sans fatigue excédentaire car ce dernier ne dépassera pas cette puissance nominale quel que soit le mode de fonctionnement du drone. De plus, cette plage permet d'assurer tous les besoins de variation de puissance nécessaires aux moteurs hydrauliques 6, quelles que soient les conditions de vol définies comme acceptables pour le drone 1, telles que la vitesse des rafales de vents face auxquelles le drone 1 doit pouvoir réagir et rester stable.

Dans cette étape E, le pilotage des vannes 17 via le contrôleur de vol 14 permet d'assurer la stabilité du drone 1. Les vannes 17 permettent de moduler le débit d'alimentation des moteurs hydrauliques 6, assurant ainsi une modification de la vitesse de rotation en fonction du besoin défini par le contrôleur de vol 14, à travers notamment des algorithmes de commande.

Pour descendre, ce qui correspond à l'étape F, on module la vitesse de rotation des moteurs hydrauliques 6 en agissant sur les vannes 17 et en diminuant la vitesse du moteur d'entrainement 11 de la pompe hydraulique 10 pour assurer l'atterrissage du drone 1.

Enfin, dans une étape G, alors que le drone 1 est au sol, on diminue encore la vitesse du moteur d'entrainement 11 de la pompe hydraulique 10 afin d'assurer un arrêt progressif des moteurs et les vannes 17 sont inactivées.

Bien entendu, l'invention n'est pas limitée aux exemples qui viennent d'être décrits. Par exemple, la pompe peut être entraînée par un moteur thermique.

**Revendications**

1.  Drone hydraulique multi-rotor (1) comportant :

    - une pluralité de moteurs hydrauliques (6) recevant chacun un fluide sous pression,
    - des hélices (5) entrainées par les moteurs hydrauliques (6),
    - au moins une pompe hydraulique (10) entrainée par au moins un moteur (11) pour mettre sous pression le fluide,
    - un système d'alimentation des moteurs hydrauliques (6) en fluide sous pression,
    - un contrôleur de vol (14) pour agir sur le système d'alimentation en fonction du régime de rotation désiré pour les moteurs hydrauliques (6),
    le système d'alimentation comportant plusieurs voies (35 ; 36 ; 37 ; 38) de réglage de la puissance d'au moins une partie des moteurs hydrauliques (6), chaque voie (35 ; 36 ; 37 ; 38) comportant une vanne (17) pilotable de manière proportionnelle, permettant de faire varier en entrée du moteur hydraulique (6) correspondant le débit d'alimentation en fluide sous pression , en fonction du régime demandé à ce moteur hydraulique (6),
    et ainsi la vitesse de rotation de l'hélice (5) associée, le débit d'alimentation du moteur hydraulique (6) augmentant quand la vanne pilotable (17) passe d'une première position à une deuxième position de plus grande ouverture que la première, le débit de fluide reçu par au moins l'un des moteurs hydrauliques quand la vanne pilotable (17) est dans la première position étant non nul, le moteur hydraulique (6) qui reçoit un débit de fluide non nul lorsque la vanne pilotable (17) est dans la première position étant connecté en série avec cette vanne pilotable (17), **caractérisé en ce que**
    chaque voie (35 ; 36 ; 37 ; 38) comportant une dérivation en parallèle de la vanne (17), cette dérivation comportant un orifice calibré (31) choisi pour délivrer en entrée du moteur (6) correspondant, un débit sensiblement constant en fluide sous pression.

2.  Drone selon la revendication 1, comportant au moins un limiteur de pression (27), notamment un par voie (35 ; 36 ; 37 ; 38), pour limiter la pression du fluide en entrée de la vanne pilotable (17) à une valeur limite prédéfinie dite pression limitée.

3.  Drone selon la revendication 1 ou 2, la vanne pilotable (17) étant fermée dans la première position d'ouverture et le débit non nul alors reçu par le moteur hydraulique (6) provenant entièrement de la dérivation.

4.  Drone selon l'une quelconque des revendications précédentes, étant filaire et étant alimenté en énergie électrique depuis le sol par un câble.

5.  Drone selon l'une quelconque des revendications précédentes, les moteurs hydrauliques (6) étant des moteurs rapides à pistons axiaux à cylindrée fixe.

6.  Drone selon l'une quelconque des revendications précédentes, comportant des supports (15) configurés pour permettre chacun la fixation d'un moteur hydraulique (6), de la vanne pilotable (17) correspondante et d'un limiteur de pression.

7.  Drone selon l'une quelconque des revendications précédentes, comportant au moins un échangeur thermique (8), notamment un par voie (35 ; 36 ; 37 ; 38), pour refroidir le fluide, notamment en sortie des moteurs hydrauliques (6).

8.  Drone selon l'une quelconque des revendications précédentes, comportant un réservoir (13) contenant et/ou destiné à recevoir le fluide et permettant d'alimenter la pompe hydraulique (10) en fluide, le réservoir (13) étant de préférence disposé de façon à ce que la pompe hydraulique (10) fonctionne en charge.

9.  Drone selon l'une quelconque des revendications précédentes, la pompe hydraulique (10) alimentant en fluide sous pression la pluralité des moteurs hydrauliques (6).

**Patentansprüche**

1.  Hydraulische Drohne mit mehreren Rotoren (1), umfassend:

    - eine Mehrzahl von hydraulischen Motoren (6), die jeweils ein Fluid unter Druck aufnehmen,
    - Propeller (5), die von den hydraulischen Motoren (6) angetrieben werden,
    - mindestens eine hydraulische Pumpe (10), die von mindestens einem Motor (11) angetrieben wird, um das Fluid unter Druck zu setzen,
    - ein Versorgungssystem zur Versorgung der hydraulischen Motoren (6) mit Fluid unter Druck,

- eine Flugsteuerung (14), um auf das Versorgungssystem in Abhängigkeit von der für die hydraulischen Motoren (6) gewünschten Drehzahl einzuwirken,

wobei das Versorgungssystem mehrere Kanäle (35; 36; 37; 38) zum Einstellen der Leistung mindestens eines Teils der hydraulischen Motoren (6) umfasst, wobei jeder Kanal (35; 36; 37; 38) ein proportional ansteuerbares Ventil (17) umfasst, was es ermöglicht, im Eingang des entsprechenden hydraulischen Motors (6) den Volumenstrom zur Versorgung mit Fluid unter Druck in Abhängigkeit von der von diesem hydraulischen Motor (6) angeforderten Drehzahl und somit die Rotationsgeschwindigkeit des zugeordneten Propellers (5) zu ändern, wobei der Volumenstrom zur Versorgung des hydraulischen Motors (6) zunimmt, wenn das ansteuerbare Ventil (17) aus einer ersten Stellung in eine zweite Stellung mit größerer Öffnung als in der ersten übergeht, wobei der Fluidvolumenstrom, der von mindestens einem der hydraulischen Motoren aufgenommen wird, wenn das ansteuerbare Ventil (17) in der ersten Stellung ist, ungleich null ist, wobei der hydraulische Motor (6), der einen Fluidvolumenstrom ungleich null aufnimmt, wenn das ansteuerbare Ventil (17) in der ersten Stellung ist, in Reihe mit diesem ansteuerbaren Ventil (17) angeschlossen ist, **dadurch gekennzeichnet, dass** jeder Kanal (35; 36; 37; 38) einen Bypass parallel zu dem Ventil (17) umfasst, wobei dieser Bypass eine kalibrierte Bohrung (31) umfasst, die so gewählt ist, dass sie im Eingang des entsprechenden Motors (6) einen im Wesentlichen konstanten Volumenstrom an Fluid unter Druck abgibt.

2. Drohne nach Anspruch 1, umfassend mindestens einen Druckbegrenzer (27), insbesondere einen je Kanal (35; 36; 37; 38), um den Druck des Fluids im Eingang des ansteuerbaren Ventils (17) auf einen vorgegebenen Grenzwert, begrenzter Druck genannt, zu begrenzen.

3. Drohne nach Anspruch 1 oder 2, wobei das ansteuerbare Ventil (17) in der ersten Öffnungsstellung geschlossen ist und wobei der dann von dem hydraulischen Motor (6) aufgenommene Volumenstrom ungleich null vollständig von dem Bypass kommt.

4. Drohne nach einem der vorhergehenden Ansprüche, wobei sie drahtgebunden ist und wobei sie vom Boden aus über ein Kabel mit elektrischer Energie versorgt wird.

5. Drohne nach einem der vorhergehenden Ansprüche, wobei die hydraulischen Motoren (6) schnelle Axialkolbenmotoren mit festem Hubraum sind.

6. Drohne nach einem der vorhergehenden Ansprüche, umfassend Halterungen (15), die dazu ausgelegt sind, jeweils die Befestigung eines hydraulischen Motors (6), des entsprechenden ansteuerbaren Ventils (17) und eines Druckbegrenzers zu ermöglichen.

7. Drohne nach einem der vorhergehenden Ansprüche, umfassend mindestens einen Wärmetauscher (8), insbesondere einen je Kanal (35; 36; 37; 38), um das Fluid zu kühlen, insbesondere im Ausgang der hydraulischen Motoren (6).

8. Drohne nach einem der vorhergehenden Ansprüche, umfassend einen Tank (13), der das Fluid enthält und/oder zu seiner Aufnahme bestimmt ist und es ermöglicht, die hydraulische Pumpe (10), mit Fluid zu versorgen, wobei der Tank (13) bevorzugt so angeordnet ist, dass die hydraulische Pumpe (10) unter Last arbeitet.

9. Drohne nach einem der vorhergehenden Ansprüche, wobei die hydraulische Pumpe (10) die Mehrzahl der hydraulischen Motoren (6) mit Fluid unter Druck versorgt.

**Claims**

1. Multi-rotor hydraulic drone (1) comprising:

    - a plurality of hydraulic motors (6) each receiving a pressurized fluid,
    - propellers (5) driven by the hydraulic motors (6),
    - at least one hydraulic pump (10) driven by at least one motor (11) for pressurizing the fluid,
    - a system for supplying the hydraulic motors (6) with pressurized fluid,
    - a flight controller (14) for operating the supply system according to the desired rotation speed for the hydraulic motors (6),
    the supply system comprising a plurality of paths (35; 36; 37; 38) for adjusting the power of at least some of the hydraulic motors (6), each path (35; 36; 37; 38) comprising a proportionally controllable valve (17), making it possible to vary the supply flow rate of pressurized fluid at the inlet of the corresponding hydraulic motor (6), according to the speed required of this hydraulic motor (6), and thus the rotation speed of the associated propeller (5), the supply flow rate of the hydraulic motor (6) increasing when the controllable valve (17) passes from a first position to a second position of greater opening than the first, the fluid flow rate received by at least one of the hydraulic motors when the controllable valve (17) is in the first position being non-zero, the hydraulic motor (6) that receives a non-zero fluid flow rate when the controllable valve (17) is in the first position being connected in series with this controllable valve (17), **characterized in that**

each path (35; 36; 37; 38) comprises a bypass in parallel with the valve 17, this bypass comprising a calibrated orifice (31) chosen to deliver a substantially constant flow rate of pressurized fluid to the inlet of the corresponding motor (6).

2. Drone according to Claim 1, comprising at least one pressure limiter (27), in particular one per path (35; 36; 37; 38), to limit the pressure of the fluid at the inlet of the controllable valve (17) to a predefined limit value, called a limited pressure.

3. Drone according to Claim 1 or 2, the controllable valve (17) being closed in the first open position and the non-zero flow rate then received by the hydraulic motor (6) coming entirely from the bypass.

4. Drone according to any one of the preceding claims, said drone being wired and being supplied with electrical power from the ground by a cable.

5. Drone according to any one of the preceding claims, the hydraulic motors (6) being fast axial piston motors with fixed displacement.

6. Drone according to any one of the preceding claims, comprising supports (15) each configured to allow the attachment of a hydraulic motor (6), of the corresponding controllable valve (17), and of a pressure limiter.

7. Drone according to any one of the preceding claims, comprising at least one heat exchanger (8), in particular one per path (35; 36; 37; 38), for cooling the fluid, in particular at the outlet of the hydraulic motors (6).

8. Drone according to any one of the preceding claims, comprising a tank (13) containing and/or intended to receive the fluid and allowing the hydraulic pump (10) to be supplied with fluid, the tank (13) preferably being arranged so that the hydraulic pump (10) operates under load.

9. Drone according to any one of the preceding claims, the hydraulic pump (10) supplying pressurized fluid to the plurality of hydraulic motors (6).

[Fig 1]

Fig. 1

[Fig 2]

Fig. 2

[Fig 3]

Fig. 3

[Fig 4]

Fig. 4

[Fig 5]

Fig. 5

[Fig 6]

Fig. 6

[Fig 7]

Fig. 7

[Fig 8]

Fig. 8

EP 4 077 137 B1

[Fig 9]

Fig. 9

[Fig 10]

Fig. 10

21

[Fig 11]

Fig. 11

[Fig 12]

Fig. 12

[Fig 13]

Fig. 13

[Fig 14]

Fig. 14

**RÉFÉRENCES CITÉES DANS LA DESCRIPTION**

**Documents brevets cités dans la description**

- EP 3450312 A
- US 3345016 A
- WO 2019074860 A